Europäisches Patentamt

(19) European Patent Office

Office européen des brevets

(11) Publication number: 0 122 679

A1

## (12) EUROPEAN PATENT APPLICATION

(21) Application number: 84200515.9

(22) Date of filing: 09.04.84

(51) Int. Cl.³: A 47 J 37/07
A 47 J 33/00

(30) Priority: 08.04.83 NL 8301243
29.04.83 NL 8301526

(43) Date of publication of application:
24.10.84 Bulletin 84/43

(84) Designated Contracting States:
AT BE CH DE FR GB IT LI LU NL SE

(71) Applicant: PACLAN B.V.
Prof. Lorentzweg 8-14 P.O. Box 174
NL-5140 AD Waalwijk(NL)

(72) Inventor: Lantau, Paul Emil Gerrit
Prof. Lorentzweg 8-14
NL-5144 NP Waalwijk(NL)

(74) Representative: van der Beek, George Frans et al,
Nederlandsch Octrooibureau Johan de Wittlaan 15 P.O.
Box 29720
NL-2502 LS The Haque(NL)

(54) Barbecue support.

(57) A barbecue comprising an underframe and a grate supported thereby. The underframe consists of four legs (9-12) connected together cross-wise at the ends adjacent to the grate by two connecting members (13, 14) provided at their centres with a hinged connection. The grate is composed of a tray (1) the bottom (3) of which is provided with apertures (2). At every turn two legs (9, 12 respectively 10, 12) are integrated rigidly with the connecting member (13 respectively 14) connected thereto. The hinged connection is releasable.

fig-1

EP 0 122 679 A1

Barbecue underframe.

The invention relates to a barbecue comprising an underframe and a grate supported thereby, said underframe consisting of four legs connected to each other crosswise at the ends adjacent to the grate by two connecting members provided with a hinged connection at their centers. Such a barbecue is known from the US Patent Specification 3,837,328.

The known barbecue comprises a grate which may be positioned onto the underframe after unrolling. Then the food to be grilled, in particular meat may be disposed onto the grate in position.

During grilling the problem arises that the meat broths perculates through the relatively large meshes of the grate, while the outer layer of the meat may burn easily by the flames. Further, the known barbecue has the disadvantage that the respective underframe is difficult in manufacture and consequently expensive.

The objection of the invention is to provide a barbecue of the above mentioned type, in which the above mentioned problem and disadvantage are obviated.

According to the invention this object is achieved in that the grate is composed of a tray the bottom of which being provided with apertures, that at every turn two legs are integrated rigidly with the connecting member joined thereto and that the hinged connection is releasable.

The bottom of the tray is provided with apertures, in which the ratio of entire metal area to total aperture area of said tray has been chosen such that for obtaining a good taste, the combustion products of the charcoal (combustion gases) may reach the meat in sufficient extent, but that not too much meat broth get lost.

Moreover the barbecue has the advantage that the underframe can be manufactured in a very simple way by bending and is thus very cheap so that after a low number of uses or after a short holiday period the underframe may be disposed without objections.

As the tray is manufactured from metal foil the tray is liable to be blown away by the wind. In order to prevent this the connecting members are provided near their ends with projections extending from the connecting members substantially parallel to the legs. The projections may be inserted through the bottom but preferably engage the outer side of the edge of the tray.

In order to improve the fixation of the relative positions of the connecting members in built up condition of the underframe, the connecting members have at their center connecting elements allowing in the assembled condition the mutual hinging of the connecting members about an axis parallel to the legs.

According to an embodiment the above mentioned hinged connection is composed by a recess facing from the tray at the center of the connecting members, the dimension of which in longitudinal direction of the connecting member being higher than the transverse dimension of the other connecting member. Thereby the advantage is obtained that the connecting members extend in one plane.

According to a further elaboration of said embodiment the opening of the recess in the one connecting member is so narrow that the other connecting member should be pressed forcefully in the recess.

According to an other embodiment, the center of the other connecting member is flattened in the direction of the legs such that in said direction the thickness of the flat portion is smaller than the width perpendicular to the connecting member and the respective legs of said portion and that the dimension of the opening of the recess in the one connecting member in its longitudinal direction is higher than the thickness and smaller than the width of the flat portion.

A more rigid structure is achieved in that the connecting elements consist of a pin attached to one connecting member and extending parallel to the legs and a bore provided in the other connecting member and the axis of which extending parallel to the respective legs.

Preferably the pin extends through the bottom of the tray and has a pointed end for inserting the pin through the tray readily. Because the pin extends through the bottom of the tray, said tray is retained additionally against forces resulting from the wind.

Further, the pin and bore may be designed in several ways.

Hereafter, the invention will be elucidated by reference to the drawing. In the drawing:

Fig.1 is a perspective view of an embodiment of a barbecue according to the invention;

Fig. 2 is a respective view of the underframe of the barbecue according to Fig. 1;

Fig. 3a, b show embodiments of an underframe according to the invention; and

Fig. 4a, b, c illustrate embodiments of the midportion of the connecting member of the underframe having a bore according to the invention.

It is noted that while the invention is described by reference to embodiments shown in the drawing, it is clear, that within the scope of the invention several modifications may be provided.

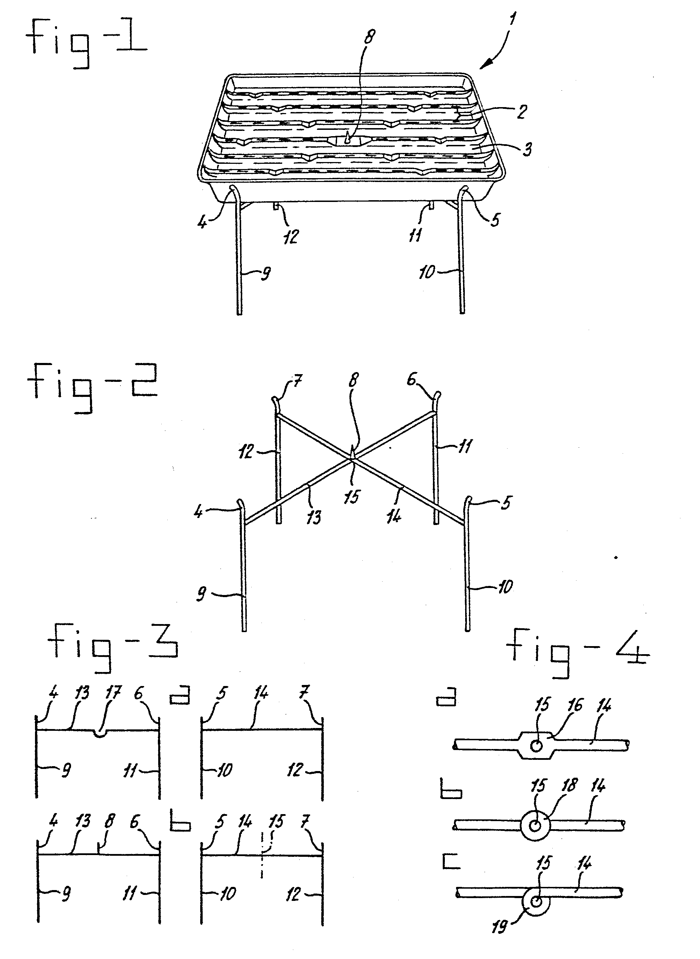

In Fig. 1 an arranged barbecue according to the invention is shown. Said barbecue comprises a tray 1 having rows of elongated apertures 2. Preferably, said tray 1 is manufactured from a thin metal foil the edge of which is reinforced for making the tray rigid in some extent. In order to improve the rigid structure further, the bottom 3 of the tray 1 is slightly corrugated, in which in the tops of the corrugations the apertures 2 are provided. The tray 1 is supported by an underframe comprising four legs connected crosswise to each other. On said cross the bottom of the tray is positioned so that when as mentioned above, the tray consists of a thin metal foil and is heated during grilling, the bottom cannot sag. The underframe has projections 4-7, of which only the projections 4 and 5 are visible in Fig. 1, and a pin 8. The projections 4-7 engage the longer edges of the tray 1, whereas the pin 8 is inserted through the bottom of the tray. Thereby the position of the tray 1 on the underframe is fixed and resistant against wind forces. The projections 4-7 are slightly bended, however they may be straight and have a pointed end. Then the projections 4-7 in this form may be inserted through the bottom 3 of the tray 1 conveniently. This results in an improved position fixation but this is at cost of the convenient arranging of the barbecue. The ends of the legs 9-12 of the barbecue underframe may also be pointed, by which if desired said legs may be inserted in the soil readilyently.

Fig. 2 shows the underframe according to the invention on which the tray is not provided yet, so that the entire underframe is better

4

visible. The underframe consists of four legs 9-12 connected two by two to each other by connecting members 13 and 14. Thus the underframe may be assembled from twoseparate U-shaped underframe parts. The underframe is arranged by inserting the four legs 9-12 in the soil such that the connecting members 13 and 14 define a horizontal supporting cross for the tray 1 to be positioned.

On behalf of the joining between the two underframe parts the connecting members 13 and 14 are provided with connecting elements in form of the pin 8 and the bore 15 respectively. The pin 8 is attached to connecting member 13 preferably by spot welding. In the other connecting member 14 the bore 15 is provided, through which the pin 8 is inserted. In order to provide the bore 15 easily and to prevent the grill from sliding away, the connecting member 14 is flattened at its center as illustrated in Fig. 4a in plan view. The flattened portion 16 of the connecting member 14 is indicated schematically in Fig. 4a.

Preferably the pin 8 has such a length that said pin projects through the bottom 3 of the tray 1 when the tray is positioned onto the underframe. By said pin the position of the tray is fixated additionally in horizontal direction so that the wind may not shift the tray in its plane. The pin 8 has a pointed end for facilitating its insertion.

While it is not shown however, the pin may be provided with a locking device preventing the tray 1 from lifting for example by the wind. Said locking device may have the shape of one or more barbs, behind which the bottom of the tray is caught after said tray has been positioned. Although the resulting aperture in the tray 1 is larger than the traverse dimension of the barbs, this will retain the tray against lifting in a reliable way, because in practice the tray is not only subjected to an upwards force, but also to a horizontal force. The locking device may also be constituted by ridges spaced by a distance higher than the thickness of the bottom 3 of the tray 1. Said ridges may be in form of a screw thread. Also hereby the same guarantee against lifting the tray 1 is obtained as with the barbs.

In the Figs. 3a and b embodiments of an underframe according to the invention are illustrated, in which the parts of the underframe are shown in juxtaposed relationship.

5

The above mentioned joining between the connecting members 13 and 14 is achieved in the embodiment of Fig. 3a by providing the connecting member 13 with a recess 17 in which the center of the connecting member 14 is received in arranging the underframe. Thereby the advantage is attained that by suitable depth of recess 17 the connecting members 13 and 14 extend in one plane. The recess 10 must have such a dimension in longitudinal direction of the connecting member 13 that the connecting member 14 may be positioned under such an angle to the connecting member 13 that the projections 4-7 engage against the longer edges of the tray 1. While it is not shown however, the opening of the recess 17 may be narrow such that the center of the connecting member 14 should be pressed with a relatively low force in the recess 17. Herein, beneath its narrowed opening the recess 17 must have a sufficient width and depth for allowing the above mentioned crosswise arrangement of the connecting members 13 and 14.

By said narrowed opening of the recess 17 the joining between the connecting members 13 and 14 is reliable although this is at cost of the connecting members 13 and 14 lying in one plane. When for example, the connecting member consists of one rod the recess 17 may be constituted by a bending.

Although it is not shown the connecting member 14 may be flattened at its center. The resulting flattened portion lies in a plane perpendicular to the legs 10 and 12 of the connecting member 14. Herein the recess 17 of the connecting member 13 is also provided with a narrowed opening the dimension of which in longitudinal direction of the connecting member 13 is larger than the thickness and smaller than the width of the flattened portion of the connecting member 14. The flattened center portion of the connecting member 14 is placed vertically through the opening into the recess and thereafter rotated by 90° so that the legs of the underframe parts are parallel to each other. In this embodiment it is only of importance that the dimension of the center portion of the connecting member in a direction parallel to the legs is smaller than the dimension of said portion perpendicular to the plane of the legs. Of course this may be implemented in different ways. The recess 17 itself is of a width (lengthwise of the respective connecting member 13) and a height higher than the width of the center portion of the connecting member 14.

In Fig. 3b an embodiment of the underframe is shown, in which the pin and bore connection 8, 15 is used as pivotable joining. The embodiments shown in the Figs.3a and b have straight projections 4-7, however of course any shape is possible. Preferably the projections 4-7 have a bended shape adapted to the shape of the edge of the tray 1.

Of course it is also possible to attach the pin corresponding to the pin 8 of Fig. 3b in the recess 17 of Fig. 3a for example by spot welding. By suitable dimensioning the recess 17 being in this case in form of a bending, the connecting members 13 and 14 may lie in one plane, while the joining between said connecting members is better defined.

In the Figs. 4a, b and c embodiments of the center portion of the connecting member 14 is shown in top view. The embodiment of Fig. 4a has already been discussed above.

According to Fig. 4b the connecting member 14 consists of two portions connected at the free ends to a ring 18, through the bore 15 of which the pin 8 may be inserted, in which of course the axis of the bore 15 is parallel to the respective legs of the connecting member 15.

In the embodiment shown in Fig. 4c the bore 15 for receiving the pin 8 is defined by a loop 19 at the center of the connecting member 14. The plane of the loop is perpendicular to the legs of the connecting member 14.

Preferably each part of the underframe is bended from a rod having a arbitrary cross-section, in which each projection 4-7 consists of a portion bended transversely to the connecting member 13, 14 and a portion folded back by 180°, said folded back portion emerges in a respective leg of the underframe part.

From the above discussion it appears that the underframe may be manufactured in a simple way and cheaply, whereas said underframe is sufficiently rigid for supporting the tray in a reliable and safe way. After the underframe is used several times or after a certain holiday period the underframe may be disposed at situ, for example camping, without any objection.

7

Because the one connecting member is shorter than the other these may be shifted in each other and packed in one plane.

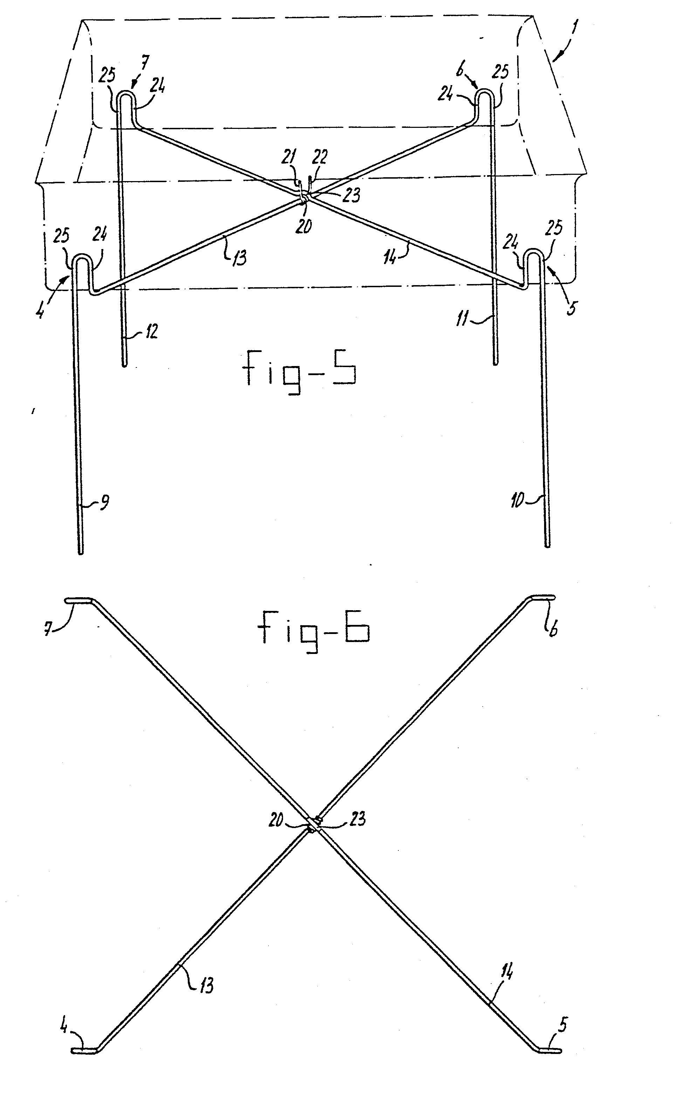

In the Figs. 5 and 6 not mentioned in the figure description an embodiment of a barbecue underframe according to the invention is illustrated in perspective view and top view respectively. Said embodiment is particularly simple and thus extremely cheap in manufacturing. In the Figs. 5 and 6 the connecting members 13 and 14 of the underframe may be seen again having the respective legs 9-12. Moreover, in Fig. 5 the tray 1 is schematically indicated by dot and dash lines.

Onto the connecting member 13 a torsion spring 20 is shifted, the aperture of which is slightly smaller than the diameter of said connecting member. When the torsion spring 20 is positioned in the center of the connecting member this clamps resiliently around the connecting member 13. The center of the other connecting member 14 is received between the legs 21 and 22 of the torsion spring 20 and is retained in position thereby. The legs 21 and 22 are spaced such that the connecting members 13 and 14 are pivotable in the horizontal plane.

In order to achieve a better fixation of the tray 1 on the connecting members at least one of the legs 21 and 22 is longer than the thickness of the connecting member 14 so that the or both of said legs may be inserted through the bottom of the tray. As it is noted above as to the pin 8 the legs 21 and 22 may be provided with locking devices for holding the tray 1 in its position.

The projections 4-7 of the underframe consist of bended portions 24 bended upwardly and perpendicularly at the ends of a connecting member and portions 25 folded back in parallel thereto and emerging into the respective legs 19-12. The plane of the portions 24 and 25 located at one end of a connecting member 13 or 14, lies in one plane parallel to the plane of the corresponding portions 24 and 25 at the other end of the same connecting member, one and another such that in arranged condition of the underframe all of the portions 24 and 25 engage the side wall of the tray 1.

0122679

8

## CLAIMS.

1. Barbecue comprising an underframe and a grate supported thereby, said underframe consisting of four legs connected together cross-wise at the ends adjacent to the grate by two connecting members provided at their centers with a hinged connection, characterized in that the grate is composed of a tray the bottom of which being provided with apertures, that at every turn two legs are integrated rigidly with the connecting member connected thereto and that the hinged connection is releasable.

2. Barbecue according to claim 1, characterized in that one of the connecting members has at the center a recess facing from the tray and the dimension of which in longitudinal direction of the connecting member being higher than the transverse dimension of the other connecting member.

3. Barbecue according to claim 2, characterized in that the opening of the recess in the one connecting member is narrow such that the other connecting member should be pressed forcefully in the recess.

4. Barbecue according to claim 2, characterized in that the other connecting member is flattened in the direction of the legs in its center such that the thickness in the direction of the legs of the flat portion is smaller than the width of said portion perpendicular to the connecting member and respective legs and that the dimension of the opening of the recess in the one connecting member is lengthwise thereof larger than the thickness and smaller than the width of said flat portion.

5. Barbecue according to claim 1 or 3, characterized in that the connecting elements consist of a pin attached to one connecting member and extending parallel to the legs and a bore in the other connecting member, the axis of which being parellel to the respective legs.

6. Barbecue according to claim 5, characterized in that the pin extends through the bottom of the tray.

7. Barbecue according to claim 6, characterized in that the pin has a pointed end.

8. Barbecue according to claim 6 or 7, characterized in that at its free end the pin is provided with a locking device located beyond the tray and preventing the tray from being lifted after said tray is positioned.

9. Barbecue according to claim 8, <u>characterized in that</u> the locking device is constituted by at least one barb.

10. Barbecue according to claim 8, <u>characterized in that</u> the locking device consists of ridges provided on the pin and spaced by a distance equal to or higher than the thickness of the bottom of the tray.

11. Barbecue according to one of the claims 5-10, <u>characterized in that</u> the bore is provided in the flattened center of the connecting member.

12. Barbecue according to one of the claims 5-10, <u>characterized in that</u> the connecting member provided with the bore comprises two portions connected at their ends facing from the legs are provided with a ring at both sides thereof, in which the axis of the bore of the ring extends parallel to the respective legs.

13. Barbecue according to one of the claims 5-10, <u>characterized in that</u> the bore is defined by a loop formed in the center of the connecting member and lying in a plane perpendicular to the respective legs.

14. Barbecue according to one of the preceding claims, <u>characterized in that</u> each connecting member is bended from a single piece.

15. Barbecue according to one of the preceding claims, <u>characterized in that</u> a connecting member is shorter than the other.

16. Barbecue according to one or more of the claims 1, 14 and 15, <u>characterized in that</u> one of the connecting members is provided with a torsion spring clamping resiliently about the center of the connecting member and the legs of which being  parallel to the legs.

17. Barbecue according to claim 16, <u>characterized in that</u> the length of the legs is at least as long as the thickness of the other connecting member.

18. Barbecue according to claim 16 or 17, <u>characteized in that</u> the other connecting member has such a bending that both of the connecting members lie in one plane.

19. Barbecue according to one of claims 1-18, <u>characterized in</u>

that each projection is constituted by a portion bended perpendicular to the connecting member and a portion folded back and emerging in the respective leg, in which the plane of said portions at the one end of a connecting member is parallel to the plane of the portions at the other end of the same connecting member, one and another such that in the arranged condition all portions engage the tray.

0122679

fig-1

fig-2

fig-3

fig-4

0122679

Fig-5

Fig-6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 837 328  (SCHAFFER)<br>* Whole document * | 1 | A 47 J   37/07<br>A 47 J   33/00 |
| A | US-A-3 256 806  (JORDAN)<br>* Column  2, line 57 - column 3, line 7 * | 1 | |
| A | US-A-3 967 803  (KIENLEN)<br>* Whole document * | 1,3 | |
| A | CH-A-   27 685  (WEIBEL)<br>* Whole document * | 1 | |
| A | FR-A-   484 518  (LAROCHE)<br><br>* Whole document * | 1,2,4<br>14,15<br>19 | **TECHNICAL FIELDS SEARCHED (Int. Cl. ³)** |
| A | FR-A-   949 356  (MIOT)<br>* Whole document * | 1 | A 47 J<br>F 24 B |
| A | US-A-3 599 558  (GOLDBERG)<br>* Whole document * | 1 | |
| A | NL-A-7 315 352  (FA. SICO) | | |
| A | FR-A-2 109 362  (CASENAVE) | | |
| | ---              -/- | | |

The present search report has been drawn up for all claims

| Place of search | Date of completion of the search | Examiner |
|---|---|---|
| THE HAGUE | 09-07-1984 | SCHARTZ J. |

**European Patent Office**

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | FR-A-2 091 144 (GOSSELIN) | | |
| | --- | | |
| A | US-A-3 194 429 (BOUET) | | |
| | ----- | | |
| | | | **TECHNICAL FIELDS SEARCHED (Int. Cl. ³)** |

The present search report has been drawn up for all claims

| Place of search | Date of completion of the search | Examiner |
|---|---|---|
| THE HAGUE | 09-07-1984 | SCHARTZ J. |